# EUROPEAN PATENT APPLICATION

(11) **EP 3 945 421 A1**
(43) Date of publication of application: **02.02.2022**
(21) Application number: 20188193.5
(22) Date of filing: 28.07.2020
(51) Int. Cl.: G06F 11/07, G06F 11/34, G05B 19/418

(54) **COMPUTER-IMPLEMENTED METHOD AND COMPUTERIZED DEVICE FOR IDENTIFYING A DEFECT GENERATOR CAUSING A DEFECT IN A PRODUCTION SYSTEM**

(71) Applicant: Siemens Aktiengesellschaft, 80333 München (DE)
(72) Inventor: Feiten, Wendelin, 85579 Neubiberg (DE); Albrecht, Sebastian, 85399 Hallbergmoos (DE)

(57) **Abstract**

Computer-implemented method and computerized device for identifying a defect generator causing a defect in a production system

The method for identifying a defect generator causing a defect in a production system for producing a number of products comprises:
providing a hierarchical model of the production system, said hierarchical model including a first hierarchical submodel of production devices, a second hierarchical submodel of operations and/or a third hierarchical submodel of products,
providing a defect model describing a certain defect being observable in the production system,
generating a number of versions of the hierarchical model based on the defect model and the hierarchical model, and generating a number of root cause hypotheses by applying a certain root cause analysis to the generated versions of the hierarchical model.

Further, a computer program product, a computerized device and and an arrangement having a production system and a computerized device are suggested.

## Description

The present invention relates to a computer-implemented method and to computer program product for identifying a defect generator causing a defect in a production system for producing a number of products using root cause analysis, said production system including a plurality of production devices with hardware and/or software configured to execute a plurality of operations for manufacturing said products. The present invention further relates to a computerized device for identifying a defect generator causing a defect in a production system using root cause analysis and to an arrangement comprising a production system and such a computerized device for identifying a defect generator in the production system.

For identifying a defect generator causing a certain defect in a production system, like a plant, root cause analysis may be used. In the root cause analysis, a defect of a product or an intermediate product may be detected and the cause for occurrence of this defect needs to be found. Such a process needs to be fast and complete in the sense that any potential cause should turn up in the search, otherwise major production problems may occur. The root cause hypothesis shall be presented to the investigators or operators in a human understandable and explainable way.

Also, once a cause has been identified, there shall be a suggestion as to how the cause can be affirmed or rejected, together with the time this investigation will probably take and the related cost. Finally, suitable measures or modifications of the production system shall be suggested to prevent the same cause to take effect in the future. This may include the installation of additional sensors and shut down mechanisms of the production system.

When investigating causes for defects, the investigator, for example an expert, needs to consider the structure and function of the production system and its production devices as well as the history of parameters and control settings. This can easily become very complex, so that cases could be overlooked, or misinterpretations of situations may occur.

Conventionally, the identification of a defect generator causing a certain defect in a production system is currently done by hand to a very large extent. Depending on the complexity of the production process, this requires the joint effort of multiple experts for the various detailed production processes. The coupling of the different production steps and view is conventionally handled via conversion steps, human discussion, and intuition.

For some subproblems, support by tools may be available (see references [1] to [5]), but all known tools give at best some hints, supporting the human cause analysis and do not provide a root cause analysis considering a full production process in a production system.

It is an object of the present invention to enhance the identification of a defect generator causing a defect in a production system.

According to a first aspect, a computer-implemented method for identifying a defect generator causing a defect in a production system for producing a number of products is suggested, said production system including a plurality of production devices with hardware and/or software configured to execute a plurality of operations for manufacturing said products. The computer-implemented method comprises:
a) providing a hierarchical model of the production system, said hierarchical model including a first hierarchical submodel of the production devices, a second hierarchical submodel of the operations and/or a third hierarchical submodel of the products,
b) providing a defect model describing at least one certain defect being observable in the production system,
c) generating a number of versions of the hierarchical model based on the provided defect model and based on the provided hierarchical model, and
d) generating a number of root cause hypotheses by applying a certain root cause analysis to the generated versions of the hierarchical model.

A production system, like a production plant or plant, particularly includes hundreds of production devices, which are capable of executing hundreds of operations for producing different products. The problem size and complexity for identifying a defect generator causing a certain defect in the production system using root cause analysis increases exponentially with respect to the size of the production system and the number of possible operations executable by said production devices.

To focus the problem size and complexity for identifying defect generators in production systems, in particular in large production systems, the hierarchical model of the production system is used here.

As mentioned above, the hierarchical model includes a first hierarchical submodel of the production devices, a second hierarchical submodel of the operations and/or a third hierarchical submodel of the products. In particular, hierarchy means that these models describing the declarative (products as well as production devices and their structures in the production system) and procedural (operations) knowledge about the production system exist on different levels of abstractions. These hierarchical models describe, for instance, the knowledge about the structure of the production system, e.g. involved materials and/or products and/or relevant operations executed by relevant production devices.

In particular, for providing the hierarchical model including said first hierarchical submodel, the second hierarchical submodel and/or the third hierarchical submodel, a common formal modeling scheme or common formal modeling approach may be used. Therefore, the steps of abstracting and refining certain information can be done automatically.

In sum, by using said hierarchical models and submodels of the production system and in particular of all its production devices and operations, the root cause analysis for the production system may be automated with a realistic complexity.

In particular, regarding step c), the number of versions of the hierarchical model, also referred to as operational models, may be generated by injecting the defect model into the hierarchical model, which may be also referred to as nominal operation model.

Moreover, probabilities may be used to specify how an operation, for example, generates a defect or propagates the defect in the production system.

Having the versions of the hierarchical model, particularly including said probabilities, one can then automate a what-if-investigation on each abstraction level by applying a root cause analysis.

In sum, the hierarchy of the used models is here the key to obtain detectable problems which can be solved by said root cause analysis. Therefore, the present method provides a realistic automatic root cause analysis for identifying defect generators in a production system based on a hierarchical model of the production system and its operations, in particular both nominal and adapted to the defect scenario based on the respective defect model. In particular, the used hierarchical model contains declarative and procedural knowledge about the production system and its operations.

In particular, the product is an end product or an intermediate product of the production system.

Software tools supporting root cause analysis are described in references [6] to [12].

In the following, several embodiments for the computer-implemented method for identifying a defect generator causing a defect in a production system are described.

According to an embodiment, the method includes:
e) identifying a defect generator causing said certain defect based on the generated root cause hypotheses. In particular, the defect generator is identified automatically.

According to a further embodiment, the method includes:
f) modifying the production system in dependence on the identified defect generator. In particular, the production system is modified such that the certain defect shall not occur in the future.

According to a further embodiment, in step c), the number of versions of the hierarchical model are generated based on the provided defect model and the provided hierarchical model such that each of said versions of the hierarchical model has a candidate for generating said certain defect or propagating said certain defect in the production system, wherein a respective certain probability is allocated to each of said candidates. Each of said versions comprises at least one candidate, wherein a certain probability is allocated to said candidate.

According to a further embodiment, the provided defect model is injected into the provided first hierarchical submodel, the provided second hierarchical submodel and/or the provided third hierarchical submodel for generating the versions of the hierarchical model.

According to a further embodiment, the respective certain probability allocated to the respective candidate being a production device, an operation or a product of the production system specifies how the candidate generates or propagates the certain defect in the production system.

The "how" in this embodiment may be embodied as a respective first probability for generating a certain defect and by a respective second probability for propagating said certain defect in the production system.

According to a further embodiment, the candidates are listed according to their allocated probabilities. The list of candidates may be output to the user or operator by means of a user interface device.

According to a further embodiment, in step a), a common formal modeling scheme is used for providing the first hierarchical submodel, the second hierarchical submodel and/or the third hierarchical submodel.

According to a further embodiment, each of the first hierarchical submodel, the second hierarchical submodel and/or the third hierarchical submodel comprises a plurality of hierarchy levels.

According to a further embodiment, the first hierarchical submodel, the second hierarchical submodel and the third hierarchical submodel comprise different numbers of hierarchy levels.

According to a further embodiment, the method includes
visualizing the generated root cause hypotheses to a user by a user interface device, and/or
visualizing the identified defect generator to the user by the user interface device.

Using the present hierarchical model being capable of capturing the knowledge about a production system on different abstraction levels and to automatically generate defect or fault models corresponding to nominal operations allows both for reducing the problem size to make it computationally tractable and for an interactive human input, wherein the complexity of the information can be handled by a human operator. This may be also referred to as "explainable AI" which means that the humans using the present user interface and system can easily understand the status of the search and can easily provide input to it. In addition, the present hierarchical approach for the root cause analysis reduces communication requirements, since data is only collected for those subproblems that are under investigation.

According to a further embodiment, the method includes
receiving a user input being input by the user using the user interface device for modifying the production system in dependence on the visualized defect generator.

The user interface device may be also referred to as user interface. The user interface advantageously allows to insert data and visualize data, in particular for judging of abnormalities in the search of the cause, depending on the current user role and particularly the chosen level of abstraction for the processed steps which may be correlated to the user role's specific rights in the production system. This provides the opportunity to interactively guide the analysis process by users, like engineers, with their expertise about the domain. On the other hand, if no such guidance can be provided, the hierarchical model may be used for automatically searching for the causes in a systematic and formal fashion.

This dynamic adaptation of the analysis depending on the user input and user role may be very helpful for a real production plant, since the problem size and complexity for the search of the root cause increase exponentially with respect to the plant size and the number of possible operations executable by the production devices of said plant.

According to a further embodiment, data is injected into the provided first hierarchical submodel, the provided second hierarchical submodel, and for the provided third hierarchical submodel for generating the versions of the hierarchical model and/or for manipulating the provided defect model by the user using the user interface device.

According to a second aspect, a computer program product is suggested, wherein the computer program product comprises a program code for executing the method of the first aspect or of an embodiment of the first aspect when the program code is run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a computerized device for identifying a defect generator causing a defect in a production system for producing a number of products is provided, said production system including a plurality of production devices with hardware and/or software configured to execute a plurality of operations for manufacturing said products. The computerized device comprises:
a first providing unit for providing a hierarchical model of the production system, said hierarchical model including a first hierarchical submodel of the production devices, a second hierarchical submodel of the operations and/or a third hierarchical submodel of the products,
a second providing unit for providing a defect model describing at least one certain defect being observable in the production system,
a first generating unit for generating a number of versions of the hierarchical model based on the provided defect model and based on the provided hierarchical model, and
a second generating unit for generating a number of root cause hypotheses by applying a certain root cause analysis to the generated versions of the hierarchical model.

In particular, the computerized device may be a computer or workstation. Moreover, the computerized device may be or may include a computer-aided or computer-related system or a computer system.

The respective unit, e.g. first providing unit, the second providing unit, the first generating unit and the second generating unit, may be implemented in hardware and/or in software. If said unit is implemented in hardware, it may be embodied as a device, e.g. as a computer or as a processor or as a part of a system, e.g. a computer system. If said unit is implemented in software, it may be embodied as a computer program product, as a function, as a routine, as a program code or as an executable object.

The embodiments and features according to the first aspect are also embodiments of the third aspect.

According to a fourth aspect, an arrangement comprising a production system for producing a number of products, said production system including a plurality of production devices with hardware and/or software configured to execute a plurality of operations for manufacturing said products, and a computerized device for identifying a defect generator causing a defect in the production system according to the third aspect is suggested.

Further possible implementations or alternative solutions of the invention also encompass combinations-that are not explicitly mentioned herein-of features described above or below with regard to the embodiments. The person skilled in the art may also add individual or isolated aspects and features to the most basic form of the invention.

Further embodiments, features, and advantages of the present invention will become apparent from the subsequent description and dependent claims, taken in conjunction with the accompanying drawings, in which:
- Fig. 1: shows a sequence of method steps of a first embodiment of a computer-implemented method for identifying a defect generator causing a defect in a production system for producing a number of products;
- Fig. 2: shows a schematic block diagram of an example of a hierarchical model of a production system;
- Fig. 3: shows a schematic block diagram of a first hierarchical submodel of the production devices of the hierarchical model from Fig. 2;
- Fig. 4: shows a schematic block diagram of a second hierarchical submodel of the operations of the hierarchical model from Fig. 2;
- Fig. 5: shows a schematic block diagram of a root cause hypothesis for a certain defect based on a generated version of the hierarchical model of Fig. 2;
- Fig. 6: shows a schematic block diagram of a second hierarchical submodel of operations for root cause hypotheses for a certain defect;
- Fig. 7: shows a sequence of method steps of a second embodiment of a computer-implemented method for identifying a defect generator causing a defect in a production system for producing a number of products; and
- Fig. 8: shows a schematic block diagram of a computerized device for identifying a defect generator causing a defect in a production system for producing a number of products.

In the Figures, like reference numerals designate like or functionally equivalent elements, unless otherwise indicated.

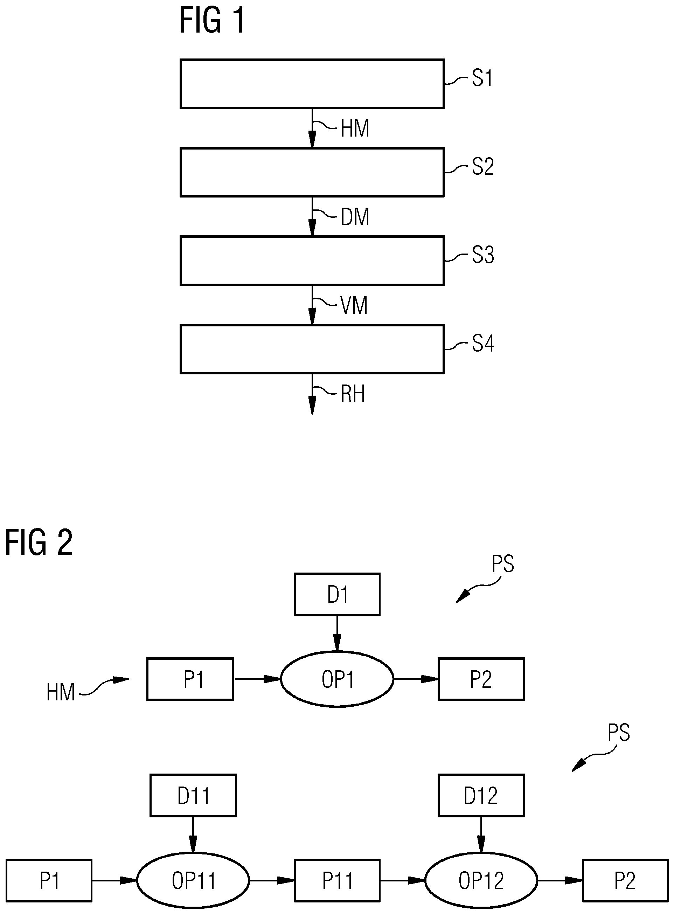

Fig. 1 depicts a sequence of method steps of a first embodiment of a computer-implemented method for identifying a defect generator G causing a defect D in a production system PS for producing a number of products.

In Fig. 1, the method steps are designated with S1 - S6. Further, in Fig. 1, HM represents a hierarchical model, DM represents a defect model, VM represents a version of the hierarchical model, and RH represents a root cause hypothesis.

The production PS (see Fig. 2) includes a plurality of production devices D1, D11, D12 with hardware and/or software configured to execute a plurality of operations OP1, OP11, OP12 for manufacturing said products P1, P11, P2, P3.

For example, if the production system PS is a creamery, a defect D may be a plastic part in the milk produced by said creamery.

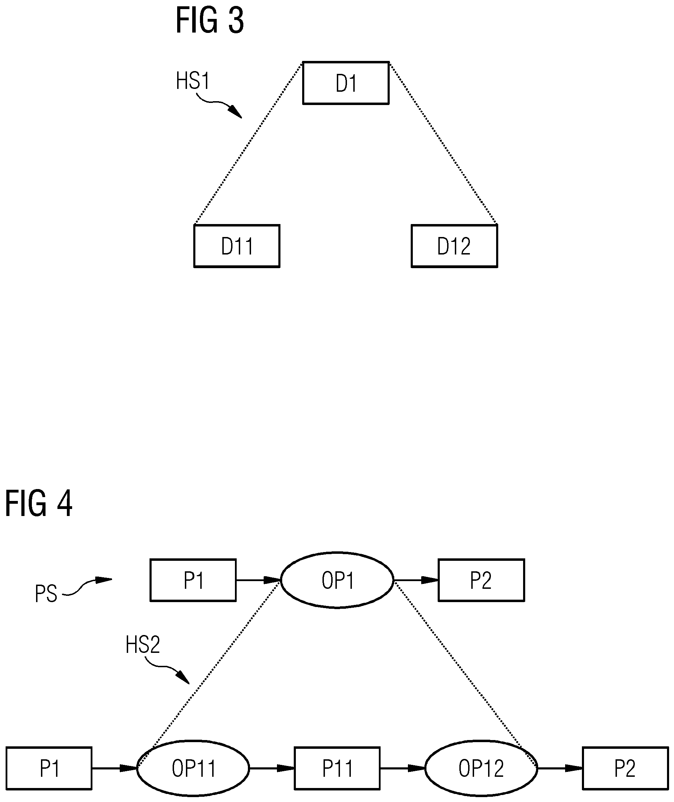

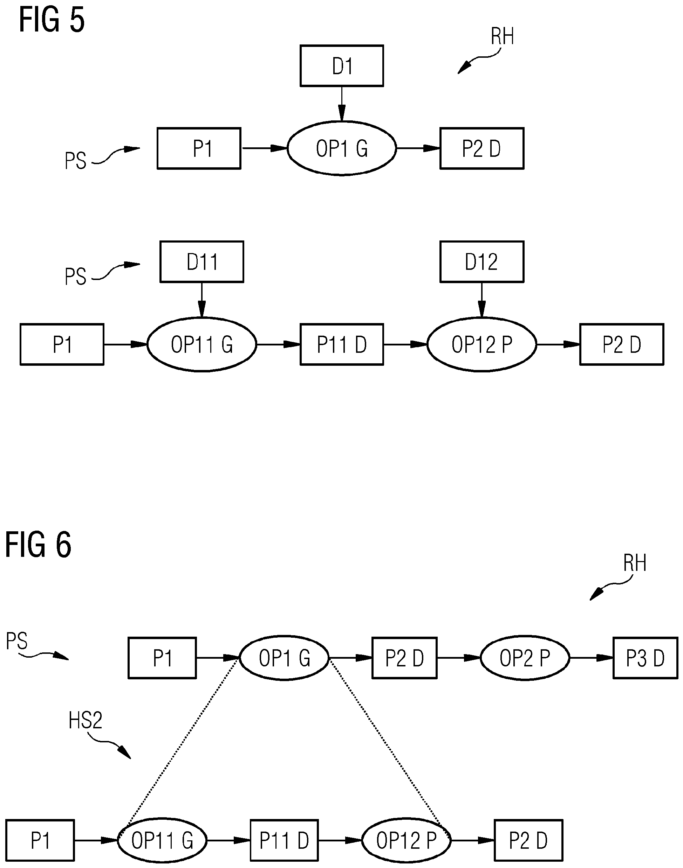

In the following, Fig. 1 is discussed referring to Fig. 2 to Fig. 6. In this regard, Fig. 2 shows a schematic block diagram of an example of a hierarchical model HM of a production system PS, Fig. 3 shows a schematic block diagram of a first hierarchical submodel HS1 of the production devices D1, D11, D12 of the hierarchical model HM from Fig. 2, Fig. 4 shows a schematic block diagram of a second hierarchical submodel HS2 of the operations OP1, OP11, OP12 of the hierarchical model HM from Fig. 2, Fig. 5 shows a schematic block diagram of a root cause hypothesis RH for a certain defect D based on a generated version VM of the hierarchical model HM of Fig. 2, and Fig. 6 shows a schematic block diagram a second hierarchical submodel HS2 of operations OP1, OP11, OP12 for root cause hypotheses RH for a certain defect D.

The method of Fig. 1 comprises the following steps S1 to S4:
In step S1, a hierarchical model HM of the production system PS is provided, said hierarchical model HM including a first hierarchical submodel HS1 of the production devices D1, D11, D12, a second hierarchical submodel HS2 of the operations OP1, OP11, OP12 and/or a third hierarchical submodel of the products P1, P11, P2, P3. As mentioned above, Fig. 2 shows a schematic block diagram of an example of a hierarchical model HM of a production system PS. The upper part of Fig. 2 shows an abstract view of the production system PS, and the lower part of Fig. 2 shows a more detailed view of the production system PS. By comparing the upper part and the lower part of Fig. 2, one realizes that said model HM of Fig. 2 is a hierarchical model.

Furthermore, Fig. 3 shows a schematic block diagram of a first hierarchical submodel HS1 of the production devices D1, D11, D12 of the hierarchical model HM from Fig. 2. According to the first hierarchical submodel HS1 of Fig. 3, what is also derivable from Fig. 2, the production device D1 includes a production device D11 and a production device D11.

In Fig. 2 to 5, product P1 is the starting product, product P2 is the end product and product P11 is an intermediate product.

According to the upper part of Fig. 2, the device D1 is configured to execute operation OP1, and in more detail according to the lower part of Fig. 2, the production device D11 executes operation OP11 as part of operation OP1, and the production device D11 executes operation OP12 of operation OP1.

Also, from the second hierarchical submodel HS2 of Fig. 4 is derivable that the operation OP1 includes the operation OP11 and the operation OP12. With reference to the lower part of Fig. 2, the production device D11 executes the operation OP11 for producing the intermediate product P11. Further, the production device D11 executes the operation OP12 having as input the intermediate product P11 and producing the end product P2.

Moreover, in said step S1 of Fig. 1, a common formal modeling scheme may be used for providing the first hierarchical submodel HS1, the second hierarchical submodel HS2 and/or the third hierarchical submodel. In particular, each of the first hierarchical submodel HS1, the second hierarchical submodel HS2 and the third hierarchical submodel comprise a plurality of hierarchy levels. Moreover, the first hierarchical submodel HS1, the second hierarchical submodel HS2 and the third hierarchical submodel particularly comprise different numbers of hierarchical levels.

In step S2 of Fig. 1, a defect model DM is provided, said defect model DM describing at least one certain defect D being observable in the production system PS. Referring to above example, the defect D being a plastic part in the produced milk, the defect model DM for this defect D may describe said defect of a plastic part as being observable in the production system PS. The defect model DM may also include probabilities at which production device D1, D11, D12 or operation OP1, OP11, OP12 or product P1, P11, P2 a said certain defect D (plastic part) may be generated.

In step S3, a number of versions VM of the hierarchical model is generated based on the provided defect model DM and based on the provided hierarchical model HM. In particular, in said step S3, the number of versions VM of the hierarchical model are generated based on the provided defect model DM and the provided hierarchical model HM such that each of said versions VM of the hierarchical model has a candidate for generating said certain defect D or propagating said certain defect D in the production system PS. Said candidate may be a candidate for defect generator or a candidate for propagating said certain defect D in the production system PS. In particular, to each of said candidates, a respective certain probability is allocated. Particularly, the provided defect model DM may be injected into the provided first hierarchical submodel HS1, the provided second hierarchical submodel HS2 and the provided third hierarchical submodel for generating said versions VM of the hierarchical model.

Above-mentioned respective certain probability allocated to the respective candidate specifies how the candidate generates or propagates the certain defect D in the production system PS. Moreover, the candidates are particularly listed according to their allocated probabilities and may be output to the user or operator.

In step S4, a number of root cause hypotheses RH are generated by applying a certain root cause analysis to the generated versions VM of the hierarchical model.

In this regard, Fig. 5 shows a schematic block diagram of one root cause hypothesis RH for a certain defect D based on a generated version VM of the hierarchical model of Fig. 2.

As one can see in the upper part of Fig. 5, the product P2 has an extension D illustrating that a defect D is observed at said product P2.

Furthermore, in Fig. 5, the extension G to an operator means that this operator could generate the defect D (with some probability). According to the upper part of Fig. 5, the operation OP1 has an extension G, and according to the lower part of Fig. 5, the operation OP11 has an extension G and thus could generate the defect D.

Moreover, the extension P in Fig. 5 means that this operator could propagate the defect D (with some other probability). According to the lower part of Fig. 5, the operations OP12 has the extension P and thus could propagate the defect D.

Furthermore, Fig. 6 shows a schematic block diagram of a second hierarchical submodel HS2 of operations OP1, OP11, OP12 for a root cause hypothesis RH for a certain defect D. In said Fig. 6, a defect D is observed at product P3. As one can see from Fig. 6, said defect D is also observable at product P2 and at product P11. Moreover, in Fig. 6, operation OP1, in particular operation OP11, is the defect generator G, wherein operation OP12 and operation OP2 propagate said defect D in the production system PS of Fig. 6.

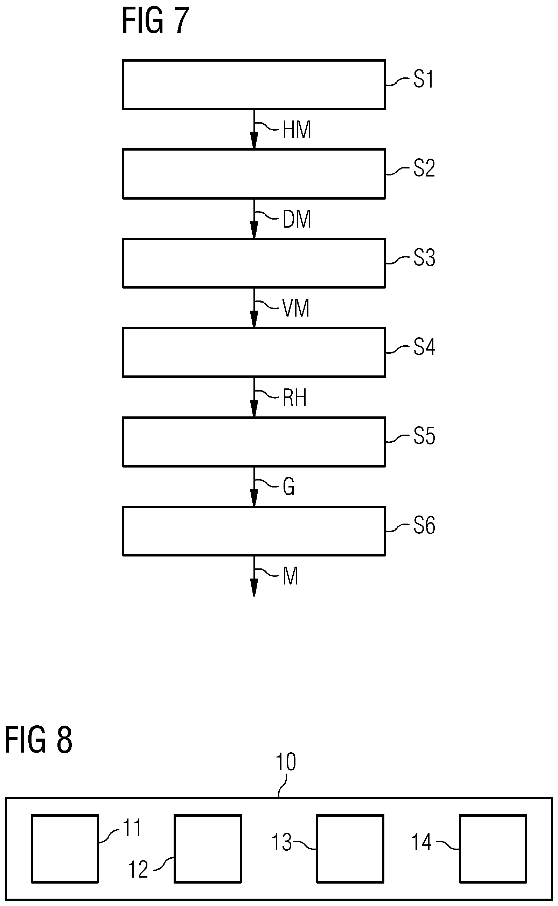

Fig. 7 depicts a sequence of method steps of a second embodiment of a computer-implemented method for identifying a defect generator G causing a defect D in a production system PS for producing a number of products P1, P11, P2, P3.

The second embodiment of Fig. 7 is based on the first embodiment of Fig. 1 and includes all the features described with reference to said first embodiment. In detail, the method of Fig. 7 comprises steps S1 to S4 discussed with reference to Fig. 1 and steps S5 and S6 additionally.

In step S5, a defect generator G causing said certain defect D is identified based on the generated root cause hypothesis RH (see Fig. 5 and Fig. 6, for example).

In step S6, the production system PS is modified by a certain modification M in dependence on the identified defect generator G.

Moreover, the method of Fig. 7 and/or the method of Fig. 1 may additionally comprise: visualizing the generated root cause hypothesis RH to a user by a user interface device, and/or
visualizing the identified defect generator G to the user by the user interface device.

Moreover, the user may input a user input using said user interface device for modifying M the production system PS in dependence on the visualized defect generator G. Moreover, the user may inject data into the provided first hierarchical submodel HS1, the provided second hierarchical submodel HS2 and/or the provided third hierarchical submodel for generating the versions VM of the hierarchical model and/or for manipulating the provided defect model DM.

Fig. 8 shows a schematic block diagram of a computerized device 10 for identifying a defect generator G causing a defect D in a production system PS for producing a number of products P1, P11, P2, P3, said production system PS including a plurality of production devices D1, D11, D12 with hardware and/or software configured to execute a plurality of operations OP1, OP11, OP12 for manufacturing said products P1, P11, P2, P3. The computerized device 10 includes a first providing unit 11, a second providing unit 12, a first generating unit 13 and a second generating unit 14.

The first providing unit 11 is configured to provide a hierarchical model HM of the production system PS, said hierarchical model HM including a first hierarchical submodel HS1 of the production devices D1, D11, D12, a second hierarchical submodel HS2 of the operations OP1, OP11, OP12 and/or a third hierarchical submodel of the products P1, P11, P2, P3.

The second providing unit 12 is configured to provide a defect model DM describing at least one certain defect D being observable in the production system PS.

The first generating unit 13 is configured to generate a number of versions VM of the hierarchical model based on the provided defect model DM and based on the provided hierarchical model HM.

Moreover, the second generating unit 14 is configured to generate a number of root cause hypotheses RH by applying a certain root cause analysis to the generated versions VM of the hierarchical model.

Although the present invention has been described in accordance with preferred embodiments, it is obvious for the person skilled in the art that modifications are possible in all embodiments.

### Reference Numerals:

- 10: computerized device
- 11: first providing unit
- 12: second providing unit
- 13: first generating unit
- 14: second generating unit
- D1: production device
- D11: production device
- D12: production device
- OP1: operation
- OP11: operation
- OP12: operation
- P1: product
- P11: product
- P2: product
- P3: product
- PS: production system
- S1 - S6: method step
- G: defect generator
- P: defect propagator
- D: defect
- HM: hierarchical model
- HS1: first hierarchical submodel
- HS2: second hierarchical submodel
- DM: defect model
- VM: version of hierarchical model
- RH: root cause hypothesis
- M: modification of the production system

### References:

- [1]: Bridging the Gap Between Semantics and Control for Industry 4.0 and Autonomous Production; B Kast, S Albrecht, W Feiten, J Zhang; 2019 IEEE 15th International Conference on Automation Science and ..., 2019
- [2]: A hierarchical planner based on set-theoretic models: Towards automating the automation for autonomous systems; B Kast, V Dietrich, S Albrecht, W Feiten, J Zhang; In ICINCO 2019, 2019
- [3]: Der digitale Zwilling in der autonomen Robotik; B Kast, S Albrecht, V Dietrich, F Wirnshofer, W Feiten, G von Wichert; atp magazin 61 (5), 74-83, 2019
- [4]: Augmenting working areas with action-relevant information for intuitive humanrobot cooperation; B Kast, PS Schmitt, S Albrecht, D Meyer-Delius, J Zhang; Proceedings of the 12th International Convention on Rehabilitation ..., 2018
- [5]: Configuration of Perception Systems via Planning Over Factor Graphs; V Dietrich, B Kast, P Schmitt, S Albrecht, M Fiegert, W Feiten, M Beetz; 2018 IEEE International Conference on Robotics and Automation (ICRA), 1-7, 2018
- [6]: https://www.sologic.com
- [7]: https://online.visual-paradigm.com/diagrams/features/root-cause-analysis-tool/
- [8]: https://www.seebo.com/root-cause-analysis-software/
- [9]: https://www.apollorootcause.com/ page/software/realitycharting
- [10]: https://www.sightline.com/solutions/root-cause-analysis/
- [11]: https://www.quentic.com/software/quentic-core/root-cause-analysis/
- [12]: https://nsc.nasa.gov/RCAT

## Claims

1. A computer-implemented method for identifying a defect generator (G) causing a defect (D) in a production system (PS) for producing a number of products (P1, P11, P2, P3), said production system (PS) including a plurality of production devices (D1, D11, D12) with hardware and/or software configured to execute a plurality of operations (OP1, OP11, OP12) for manufacturing said products (P1, P11, P2, P3), the method comprising:
a) providing (S1) a hierarchical model (HM) of the production system (PS), said hierarchical model (HM) including a first hierarchical submodel (HS1) of the production devices (D1, D11, D12), a second hierarchical submodel (HS2) of the operations (OP1, OP11, OP12) and/or a third hierarchical submodel of the products (P1, P11, P2, P3),
b) providing (S2) a defect model (DM) describing at least one certain defect (D) being observable in the production system (PS),
c) generating (S3) a number of versions (VM) of the hierarchical model based on the provided defect model (DM) and based on the provided hierarchical model (HM), and
d) generating (S4) a number of root cause hypotheses (RH) by applying a certain root cause analysis to the generated versions (VM) of the hierarchical model.

2. The method of claim 1,
**characterized by**
e) identifying (S5) a defect generator (G) causing said certain defect (D) based on the generated root cause hypotheses (RH), and
f) modifying (S6) the production system (PS) in dependence on the identified defect generator (G).

3. The method of claim 1 or 2,
**characterized in**
**that**, in step c), the number of versions (VM) of the hierarchical model are generated based on the provided defect model (DM) and the provided hierarchical model (HM) such that each of said versions (VM) of the hierarchical model has a candidate for generating said certain defect (D) or propagating said certain defect (D) in the production system (PS), wherein a respective certain probability is allocated to each of said candidates.

4. The method of claim 3,
**characterized in**
**that** the provided defect model (DM) is injected into the provided first hierarchical submodel (HS1), the provided second hierarchical submodel (HS2) and the provided third hierarchical submodel for generating the versions (VM) of the hierarchical model.

5. The method of claim 3 or 4,
**characterized in**
**that** the respective certain probability allocated to the respective candidate being a production device (D1, D11, D12), an operation (OP1, OP11, OP12) or a product (P1, P11, P2, P3) of the production system (PS) specifies how the candidate generates or propagates the certain defect (D) in the production system (PS).

6. The method of one of claims 3 to 5,
**characterized in**
**that** the candidates are listed according to their allocated probabilities.

7. The method of one of claims 1 to 6,
**characterized in**
**that**, in step a), a common formal modeling scheme is used for providing the first hierarchical submodel (HS1), the second hierarchical submodel (HS2) and/or the third hierarchical submodel.

8. The method of one of claims 1 to 7,
**characterized in**
**that** each of the first hierarchical submodel (HS1), the second hierarchical submodel (HS2) and/or the third hierarchical submodel comprises a plurality of hierarchy levels.

9. The method of claim 8,
**characterized in**
**that** the first hierarchical submodel (HS1), the second hierarchical submodel (HS2) and the third hierarchical submodel comprise different numbers of hierarchy levels.

10. The method of one of claims 1 to 9,
**characterized by**
visualizing the generated root cause hypotheses (RH) to a user by a user interface device, and/or
visualizing the identified defect generator (G) to the user by the user interface device.

11. The method of claim 10,
**characterized by**
receiving a user input being input by the user using the user interface device for modifying the production system (PS) in dependence on the visualized defect generator (G).

12. The method of one of claims 1 to 11,
**characterized in**
**that** data is injected into the provided first hierarchical submodel (HS1), the provided second hierarchical submodel (HS2 and/or the provided third hierarchical submodel for generating the versions (VM) of the hierarchical model and/or for manipulating the provided defect model (DM) by the user using the user interface device.

13. A computer program product comprising a program code for executing the method of one of claims 1 to 12 for identifying a defect generator (G) causing a defect (D) in a production system (PS) for producing a number of products (P1, P11, P2, P3) when run on at least one computer.

14. A computerized device (10) for identifying a defect generator (G) causing a defect (D) in a production system (PS) for producing a number of products (P1, P11, P2, P3), said production system (PS) including a plurality of production devices (D1, D11, D12) with hardware and/or software configured to execute a plurality of operations (OP1, OP11, OP12) for manufacturing said products (P1, P11, P2, P3), the computerized device (10) comprising:
a first providing unit (11) for providing a hierarchical model (HM) of the production system (PS), said hierarchical model (HM) including a first hierarchical submodel (HS1) of the production devices (D1, D11, D12), a second hierarchical submodel (HS2) of the operations (OP1, OP11, OP12) and/or a third hierarchical submodel of the products (P1, P11, P2, P3),
a second providing unit (12) for providing a defect model (DM) describing at least one certain defect (D) being observable in the production system (PS),
a first generating unit (13) for generating a number of versions (VM) of the hierarchical model based on the provided defect model (DM) and based on the provided hierarchical model (HM), and
a second generating unit (14) for generating a number of root cause hypotheses (RH) by applying a certain root cause analysis to the generated versions (VM) of the hierarchical model.

15. An arrangement comprising a production system (PS) for producing a number of products (P1, P11, P2, P3), said production system (PS) including a plurality of production devices (D1, D11, D12) with hardware and/or software configured to execute a plurality of operations (OP1, OP11, OP12) for manufacturing said products (P1, P11, P2, P3), and a computerized device (10) for identifying a defect generator (G) causing a defect (D) in the production system (PS) according to claim 14.
